# EUROPEAN PATENT SPECIFICATION

(11) **EP 4 027 586 B1**
(45) Date of publication and mention of the grant of the patent: **04.09.2024**
(21) Application number: 20862378.5
(22) Date of filing: 07.09.2020
(51) Int. Cl.: H04L 45/302, H04L 45/28, H04L 41/0663, H04L 41/0686, H04L 43/0829

(54) **PROTECTION SWITCHING METHOD, NODE DEVICE AND STORAGE MEDIUM**
SCHUTZSCHALTVERFAHREN, KNOTENVORRICHTUNG UND SPEICHERMEDIUM
PROCÉDÉ DE COMMUTATION DE PROTECTION, DISPOSITIF DE NOEUD ET SUPPORT DE STOCKAGE

(30) Priority: 09.09.2019 CN 201910848682
(43) Date of publication of application: 13.07.2022
(73) Proprietor: China Mobile Communication Co., Ltd Research Institute, Beijing 100053 (CN); CHINA MOBILE COMMUNICATIONS GROUP CO., LTD., Beijing 100032 (CN)
(72) Inventor: HAN, Liuyan, Beijing 100053 (CN)
(74) Representative: J A Kemp LLP
(86) International application number: PCT/CN2020/113841
(87) International publication number: WO 2021/047483

(56) References cited:
- EP-A1- 3 817 288
- CN-A- 101 719 843
- CN-A- 102 215 127
- CN-A- 105 281 931
- CN-A- 108 632 121
- CN-A- 109 547 279
- CN-A- 110 581 774
- US-A1- 2011 069 607
- US-A1- 2016 142 286
- US-A1- 2017 339 028
- US-A1- 2017 339 028
- HAN CHINA MOBILE F YANG HUAWEI TECHNOLOGIES L: "Signal Degrade Indication Used in Segment Routing over MPLS Network; draft-han-mpls-sdi-sr-00.txt", 13 July 2020 (2020-07-13), pages 1 - 8, XP015140674, Retrieved from the Internet <URL:https://tools.ietf.org/html/draft-han-mpls-sdi-sr-00> [retrieved on 20200713]
- CHOI JIN SEEK: "Design and Implementation of a Stateful PCE-Based Unified Control and Management Framework for Carrier-Grade MPLS-TP Networks", JOURNAL OF LIGHTWAVE TECHNOLOGY, IEEE, USA, vol. 34, no. 3, 1 February 2016 (2016-02-01), pages 836 - 844, XP011598944, ISSN: 0733-8724, [retrieved on 20160212], DOI: 10.1109/JLT.2015.2502238

## Description

### CROSS-REFERENCE TO RELATED APPLICATION

The present application is based on and claims priority to Chinese Application No. 201910848682.4, filed on September 09, 2019.

### TECHNICAL FIELD

The present application relates to the field of wireless communication technologies, and in particular to a protection switching method, a node device, and a storage medium.

### BACKGROUND

Protection switching is a basic function of a transmission network. Both a working path and a protection path are established for a service. When the working path fails, the switching to the protection path is triggered as soon as possible, so as to prevent affecting service performance as much as possible.

The working path may be a link comprising multiple nodes. When an intermediate node fails, in the case that signal fails, source-destination nodes at both ends may detect the fault and trigger the switching. However, in the case that performance degradation occurs in an intermediate node, since many performance degradation detection methods are performed based on point-to-point detection, the performance degradation can be detected only in the intermediate node where the performance degradation occurs, and nodes at both source and destination ends cannot detect the degradation. Therefore, when the intermediate node detects the signal degradation, a notification message may be sent so that the downstream destination node can know the signal degradation and trigger the protection switching.

With the development of Fifth Generation (5G) communication, the layer 3 Segment Routing, SR, technology has been introduced into transmission devices, which identifies nodes on the tunnel that need to be passed through by using a series of ordered segment identifiers, segment IDs. However, the transmission technology does not support protection switching caused by performance degradation. Related technologies can be found at least in patent documents US2011/069607A1, US2017339028A1 and EP3817288&CN110581774A1, and in non-patent document "Design and Implementation of a Stateful PCE-Based Unified Control and Management Framework for Carrier-Grade MPLS-TP Networks", JOURNAL OF LIGHTWAVE TECHNOLOGY, IEEE, USA, vol. 34, no. 3, 1 February 2016 (2016-02-01), pages 836-844.

### SUMMARY

Embodiments of the present disclosure are intended to provide a protection switching method, a node device and a storage medium.

The invention is set out in the appended set of claims.

Embodiments of the present disclosure provide a protection switching method, a node device and a storage medium. A first node device identifies a received packet upon detecting signal degradation. When the first node device identifies that the packet is an OAM packet, the first node device fills the OAM packet with a first identifier, and sends a modified OAM packet; herein the first identifier is used for indicating the signal degradation. A second node device identifies that a specific reserved field identifier in the OAM packet is the first identifier, and triggers the path protection switching. According to the technical solutions of the embodiments of the present disclosure, through modifying the OAM packet, filling the OAM packet with the first identifier characterizing the signal degradation, and notifying a downstream node that the signal degradation occurs in the current first node device with the modified OAM packet, the second node device is enabled to perform protection switching. Therefore, in a transmission network based on the segment routing technology, protection switching can be performed when the signal degradation occurs.

### BRIEF DESCRIPTION OF THE DRAWINGS

FIG. 1 is a first flowchart of a protection switching method according to an embodiment of the present disclosure.
FIG. 2 is a diagram of information forwarding based on SR in related art.
FIG. 3 is a second flowchart of a protection switching method according to an embodiment of the present disclosure.
FIG. 4 is a third flowchart of a protection switching method according to an embodiment of the present disclosure.
FIG. 5 is a first structural diagram of a node device according to an embodiment of the present disclosure.
FIG. 6 is a second structural diagram of a node device according to an embodiment of the present disclosure.
FIG. 7 is a third structural diagram of a node device according to an embodiment of the present disclosure.
FIG. 8 is a structural diagram of a hardware composition of a node device according to an embodiment of the present disclosure.

### DETAILED DESCRIPTION

The following describes the present disclosure in further detail with reference to the accompanying drawings and specific embodiments.

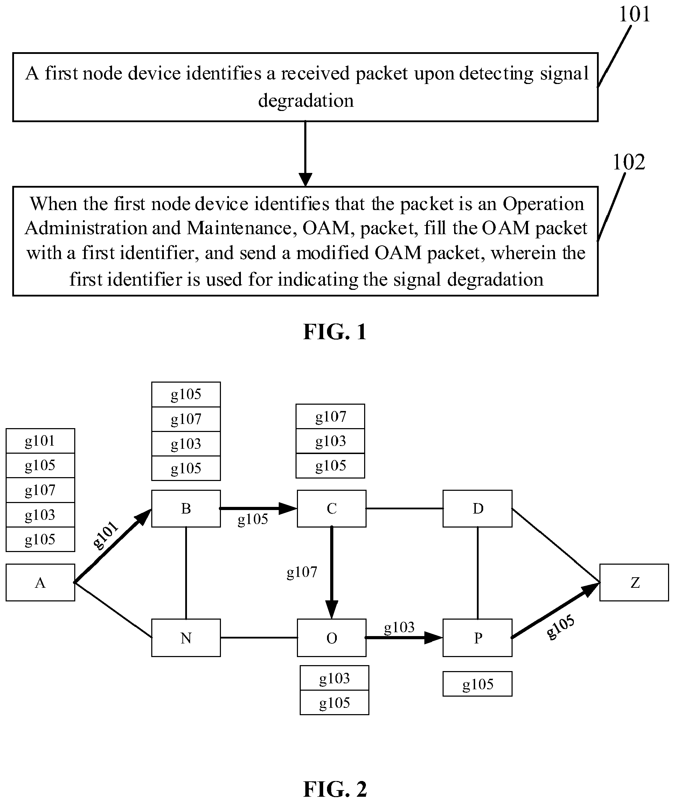

Embodiments of the present disclosure provide a protection switching method. FIG. 1 is a first flowchart of a protection switching method according to an embodiment of the present disclosure. As shown in FIG. 1, the method includes the following operations.

At block 101, a first node device identifies a received packet upon detecting signal degradation.

At block 102, when the first node device identifies that the packet is an OAM, packet, the first node device fills the OAM packet with a first identifier, and sends a modified OAM packet. The first identifier is used for indicating the signal degradation.

The protection switching method of the embodiment is applicable to a network in which information is forwarded based on a layer 3 SR technology. The transport tunnel consists of a series of ordered segment IDs for identifying node devices on the tunnel that need to be passed through. The source node may encapsulate the segment list in the packet header. The source node device and the intermediate node device may forward the information according to the path information indicated by the segment list in the packet header. FIG. 2 is a diagram of information forwarding based on SR in related art. As shown in FIG. 2, if the source node is node A and the destination node is node Z, then node B, node C, node D, node N, node O, and node P are all intermediate nodes. The node A may encapsulate the segment list, which indicates the path information, in the packet header. In an embodiment, the segment IDs may include g101, g105, g107, g103 and g105 in order, which indicate that the transmission path is node A- node B- node C- node O- node P- node Z. For each node device at which the packet arrives, the node device may strip the outer label and forward the information. For example, the node A forwards the packet to the node B according to the segment ID g101 in the segment list; after receiving the packet, the node B strips the outermost segment ID g101 in the segment list in the packet header and forwards the packet to the node C according to the next segment ID g105, and so on, and forwards the packet to the node Z. It can be seen that each intermediate node may only strip the outermost label (i.e., segment ID) and does not record tunnel information. Therefore, when the intermediate node degrades, since the path information of the intermediate node is unknown, the degradation-related situation cannot be notified, and the source node or the destination node cannot be informed to trigger protection switching.

Based on the above, the first node device in the present embodiment is an intermediate node device in the network, and may be, for example, one of node B, node C, node D, node N, node O, and node P in FIG. 2.

For example, the first node device detects the signal degradation, which includes the following operations. The first node device checks a Frame Check Sequence, FCS, of the packet, and detects the signal degradation based on a check result. Alternatively, the first node device sends a signal and receives a response signal. A bit error rate or a packet loss rate is determined according to the sent signal and the received response signal. The signal degradation is detected according to the bit error rate or the packet loss rate.

Taking the manner of FCS-based signal degradation detection as an example, when the source node sends a data frame, the FCS is calculated based on the header and the data part of the data frame, and the calculated FCS is represented by a 4-byte cyclic redundancy check code in the end of the data frame. After receiving the data frame, the destination node re-calculates the FCS in the same manner. If the calculated FCS is different from the FCS carried in the received data frame, it indicates that an error occurs in the process of transmitting the data frame, that is, the signal degradation occurs in the first node device.

In the embodiment, the first node device modifies the OAM packet carrying the segment routing label, and fills the OAM packet with a first identifier indicating signal degradation.

In an alternative embodiment of the present disclosure, when the first node device identifies that the packet is an OAM packet, the first node device fills the OAM packet with a first identifier, which includes the following operation. When the first node device identifies that the packet is a specific type of OAM packet, the first node device modifies a specific reserved field identifier in the OAM packet to the first identifier.

In the embodiment, as an implementation, the first node device may modify all types of OAM packets, and fill the OAM packets with the first identifier. In another implementation, the first node device may modify a specific type of OAM packet, and only fill the specific type of OAM packet with the first identifier.

In the embodiment of the present disclosure, the first node device identifies that the packet is a specific type of OAM packet, which includes the following operations. The first node device identifies a first specific field in the packet, and determines that the packet is the OAM packet in the case that a value of the first specific field is a first specific value. The first node device identifies a second specific field in the OAM packet, and determines that the packet is the specific type of OAM packet in the case that a value of the second specific field is a second specific value.

In the embodiment, the value of the first specific field in the OAM packet is the first specific value. Tables 1 and 2 illustrate the OAM encapsulation, respectively. Table 1 illustrates the OAM encapsulation with path segment label, and Table 2 illustrates the OAM encapsulation without path segment label. As shown in Table 1 and Table 2, whether it is an OAM packet is identified through the field "GAL Label" (i.e., the first specific field) in the packet. If the value of the field "GAL Label" is the first specific value, it indicates that the packet is an OAM packet. Further, for the OAM packet, if the value of the field "OpCode" in the packet is the second specific value, it indicates that the packet is a specific type of OAM packet. For example, if the value of the field "OpCode" is "0x01", it indicates that it is an OAM packet of a Continuity Check Message (CCM). Of course, the specific type of OAM packet may also be other type of OAM packet, which are not limited in this embodiment.

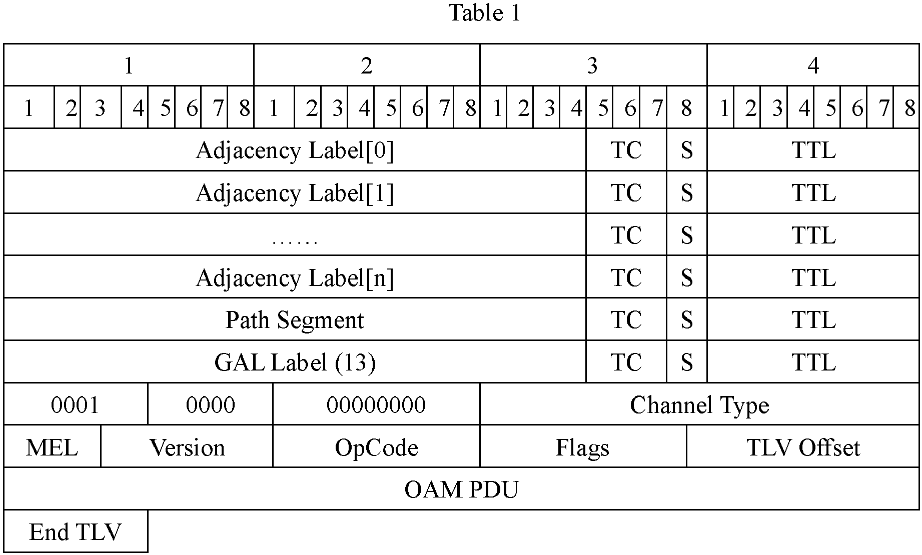

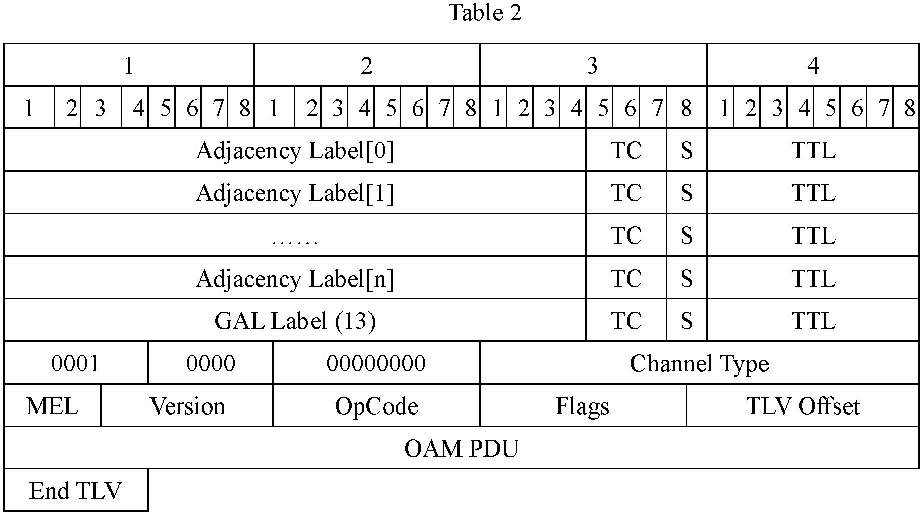

In the invention, the first node device fills the OAM packet with a first identifier, and indicates, through the first identifier, that the current OAM packet is an OAM packet for notifying signal degradation. The first node device modifies the reserved field identifier in the OAM packet and modifies the reserved field identifier to the first identifier.

For example, as shown in Table 1 or Table 2, the first identifier may be filled in the OpCode area (i.e., the encoding area) or the OAM PDU load area (i.e., the load area) of the message, and a specific value (i.e., the first identifier), such as "1", may be filled in the encoding area or the load area, which indicates that the current OAM packet is an OAM packet for notifying signal degradation.

As an implementation, as shown in the OAM encapsulation diagram of Table 3 below, the reserved field identifier after the OpCode field and the RDI field is filled with 1 as an indication of signal degradation.

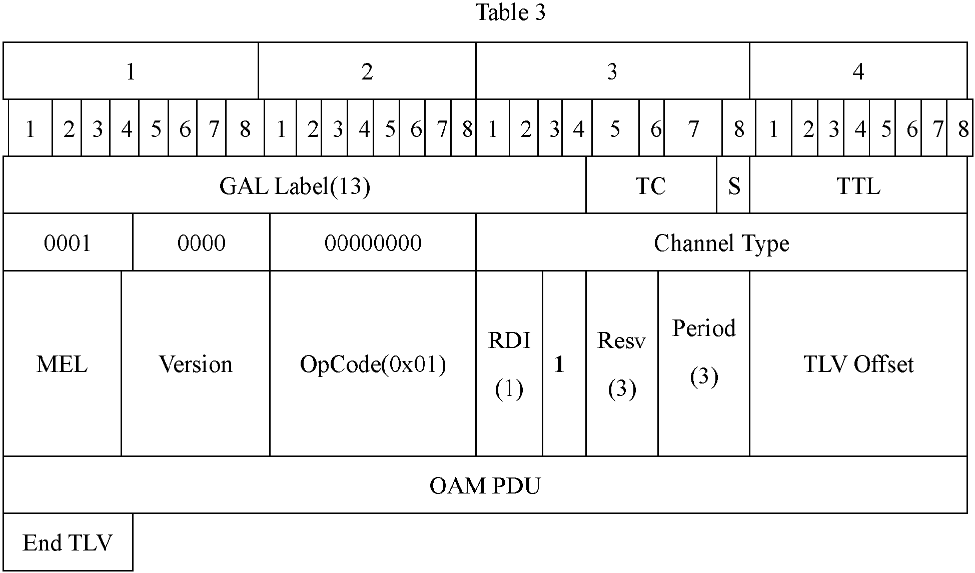

In the embodiment, if the first node device identifies multiple OAM packets upon detecting the signal degradation, the first node device fills each of the multiple OAM packets with the first identifier and sends the multiple OAM packets. Alternatively, if the first node device identifies multiple specific types of OAM packets upon detecting the signal degradation, the first node device fills each of the multiple specific types of OAM packets with the first identifier and sends the multiple specific types of OAM packets.

According to the technical solutions of the embodiments of the present disclosure, through modifying the OAM packet, filling the OAM packet with the first identifier characterizing the signal degradation, and notifying a downstream node that the signal degradation occurs in the current first node device with the modified OAM packet, the second node device is enabled to perform protection switching. Therefore, in a transmission network based on the segment routing technology, protection switching can be performed when the signal degradation occurs.

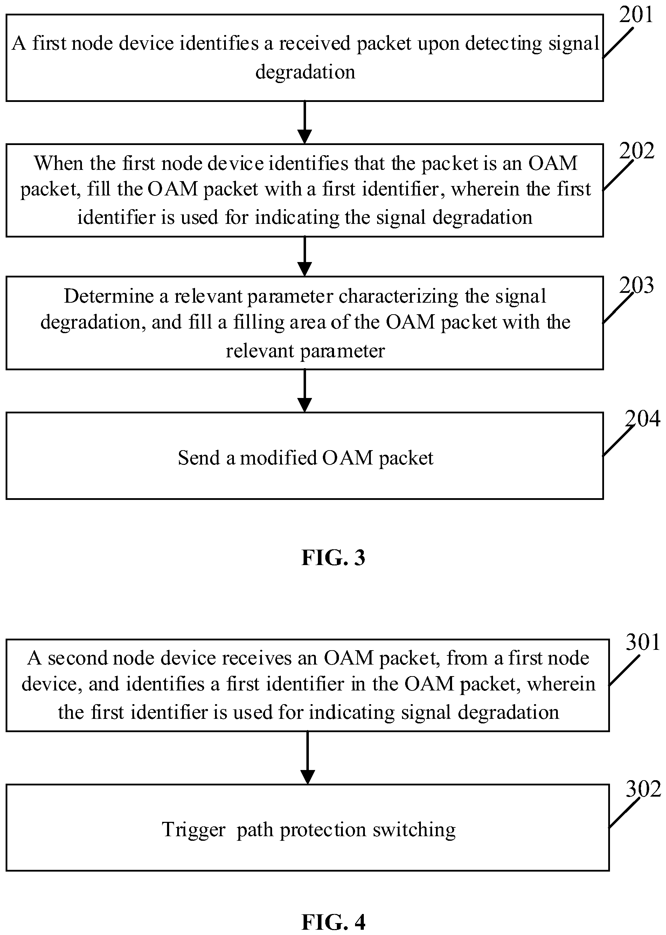

Embodiments of the present disclosure provide a protection switching method. FIG. 3 is a second flowchart of a protection switching method according to an embodiment of the present disclosure. As shown in FIG. 3, the method includes the following operations.

At block 201, a first node device identifies a received packet upon detecting signal degradation.

At block 202, when the first node device identifies that the packet is an OAM, packet, the first node device fills the OAM packet with a first identifier. The first identifier is used for indicating the signal degradation.

At block 203, the first node device determines a relevant parameter characterizing the signal degradation. A filling area of the OAM packet is filled with the relevant parameter.

At block 204, a modified OAM packet is sent.

The detailed description of block 201, block 202 and block 204 can refer to the description of blocks 101 to 103 in the foregoing embodiment, which will not be described here.

In the embodiment, the first node device detects a relevant parameter characterizing signal degradation. The relevant parameter includes at least one of a bit error rate, a packet loss rate, and the like. The relevant parameter is filled in a load area of the OAM packet, to notify the downstream node of the specific state of signal degradation occurred in the first node device.

According to the technical solutions of the embodiments of the present disclosure, through modifying the OAM packet, filling the OAM packet with the first identifier characterizing the signal degradation, and notifying a downstream node that the signal degradation occurs in the current first node device with the modified OAM packet, the second node device is enabled to perform protection switching. Therefore, in a transmission network based on the segment routing technology, protection switching can be performed when the signal degradation occurs. Further, the relevant parameter characterizing the signal degradation is filled in the modified OAM packet, to notify the downstream node of the specific state of signal degradation.

Embodiments of the present disclosure further provide a protection switching method. FIG. 4 is a third flowchart of a protection switching method according to an embodiment of the present disclosure. As shown in FIG. 4, the method includes the following operations.

At block 301, a second node device receives an OAM packet from a first node device, and identifies a first identifier in the OAM packet. The first identifier is used for indicating signal degradation.

At block 302, the second node device triggers path protection switching.

Based on the description of FIG. 2 in the foregoing embodiment, the second node device in the embodiment is a destination node, such as the node Z in FIG. 2.

In the embodiment, the second node device receives an OAM packet from the first node device, and the OAM packet carries the first identifier characterizing signal degradation.

Here, for example, as shown in Table 1 or Table 2, the first identifier may be filled in the OpCode area (i.e., the encoding area) or the OAM PDU load area (i.e., the load area) of the packet, and a specific value (i.e., the first identifier), such as "1", may be filled in the encoding area or the load area, which indicates that the current packet is a packet for indicating signal degradation. The second node device identifies that the field corresponding to the encoding area (e.g., the OpCode area of the encapsulation structure) or the load area (e.g., the OAM PDU load area of the encapsulation structure) in the packet is of a specific value (e.g., "1"), so that the first identifier characterizing the signal degradation can be identified.

In a case where the first identifier is identified, the second node device triggers the path protection switching, that is, the second node device triggers the first node device to switch from the working path to the protection path.

In the embodiment of the present disclosure, the method further includes the following operations. The second node device identifies a relevant parameter in a filling area of the OAM packet, determines whether a value of the relevant parameter reaches a preset threshold, and obtains a determination result. Herein the relevant parameter characterizes the signal degradation. The second node device triggers the path protection switching, which includes the following operations. The second node device triggers the path protection switching in the case that the determination result is that the value of the relevant parameter reaches the preset threshold.

In the embodiment, the first node device may add the detected relevant parameter characterizing the signal degradation to the packet. For example, the relevant parameter includes at least one of a bit error rate, a packet loss rate, and the like. The second node device identifies the relevant parameter, which is carried by the packet, characterizing the signal degradation, and determines whether to trigger path protection switching according to whether the relevant parameter reaches the preset threshold value. For different types of relevant parameters, respective preset threshold values may be configured. For example, a first preset threshold value may be configured for a bit error rate, and a second preset threshold value may be configured for a packet loss rate. It is determined whether the value of the bit error rate reaches the first preset threshold value, and the path protection switching is triggered in the case that the value of the bit error rate reaches the first preset threshold value. Alternatively, it is determined whether the value of the packet loss rate reaches the second preset threshold value, and the path protection switching is triggered in the case that the value of the packet loss rate reaches the second preset threshold value.

In the embodiment, the second node device may determine the triggering strategy of the protection switching according to a pre-agreed method or a configuration of the high-layer node device, that is, directly triggering the protection switching when identifying that the packet carries the first identifier, or triggering the protection switching when the relevant parameter carried in the packet exceeds the preset threshold value.

According to the technical solutions of the embodiments of the present disclosure, through modifying the OAM packet, filling the OAM packet with the first identifier characterizing the signal degradation, and notifying a downstream node that the signal degradation occurs in the current first node device with the modified OAM packet, the second node device is enabled to perform protection switching. Therefore, in a transmission network based on the segment routing technology, protection switching can be performed when the signal degradation occurs. Further, the relevant parameter characterizing the signal degradation is filled in the modified OAM packet, to notify the downstream node of the specific state of signal degradation.

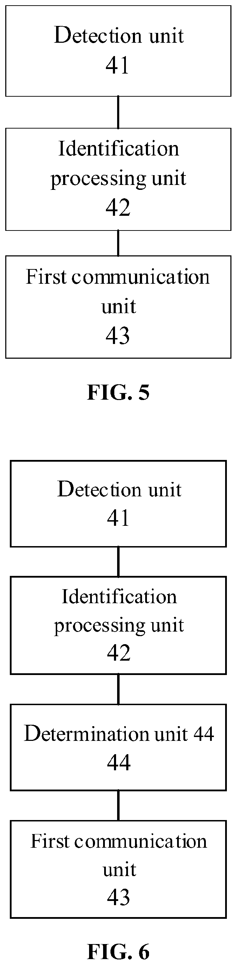

Embodiments of the present disclosure further provide a node device, which is a first node device. FIG. 5 is a first structural diagram of a node device according to an embodiment of the present disclosure. As shown in FIG. 5, the node device includes a detection unit 41, an identification processing unit 42 and a first communication unit 43.

The detection unit 41 is configured to detect signal degradation.

The identification processing unit 42 is configured to identify a received packet upon detecting signal degradation, and fill an OAM packet with a first identifier when identifying that the packet is the OAM packet. The first identifier is used for indicating the signal degradation.

The first communication unit 43 is configured to send a modified OAM packet.

In an alternative embodiment of the present disclosure, the identification processing unit 42 is configured to modify a specific reserved field identifier in the OAM packet to the first identifier when identifying that the packet is a specific type of OAM packet.

In the embodiment of the present disclosure, the identification processing unit 42 is configured to identify a first specific field in the packet, determine that the packet is the OAM packet in the case that a value of the first specific field is a first specific value, identify a second specific field in the OAM packet and determine that the packet is the specific type of OAM packet in the case that a value of the second specific field is a second specific value.

The node device further includes a determination unit 44, configured to determine a relevant parameter characterizing the signal degradation and fill a filling area of the OAM packet with the relevant parameter.

The relevant parameter includes at least one of a bit error rate or a packet loss rate.

In an embodiment of the present disclosure, the OAM packet includes a segment routing label.

In the embodiment of the present disclosure, the detection unit 41, the identification processing unit 42, and the determination unit 44 in the node device can be implemented by a Central Processing Unit, CPU, a Digital Signal Processor, DSP, a Microcontroller Unit, MCU, or a Field-Programmable Gate Array, FPGA, in the node device. The first communication unit in the terminal can be implemented in practical application by a communication module (including a basic communication kit, an operating system, a communication module, a standardized interface and protocol) and a transceiver antenna.

It should be noted that when the node device according to the above embodiment performs protection switching, the division of the above program modules is illustrated merely as an example. In practical application, the above processing can be allocated by different program modules as necessary, that is, the internal structure of the node device is divided into different program modules to complete all or part of the above-described processing. In addition, the node device according to the above embodiments belongs to the same concept as the method embodiments of protection switching. For a detailed implementation process, the method embodiments may be referred to, and details are not described herein.

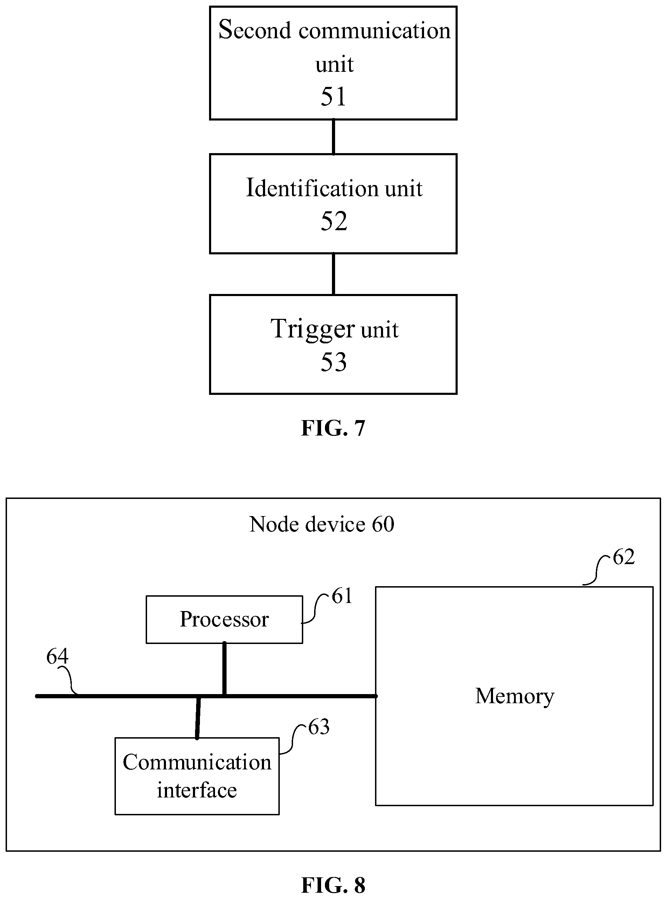

Embodiments of the present disclosure further provide a node device, which is a second node device. FIG. 7 is a third structural diagram of a node device according to an embodiment of the present disclosure. As shown in FIG. 7, the node device includes a second communication unit 51, an identification unit 52 and a trigger unit 53.

The second communication unit 51 is configured to receive an OAM packet from a first node device.

The identification unit 52 is configured to identify that a specific reserved field identifier in the OAM packet is a first identifier. The first identifier is used for indicating signal degradation.

The trigger unit 53 is configured to trigger path protection switching.

In an alternative embodiment of the present disclosure, the identification unit 52 is further configured to identify a relevant parameter in a filling area of the OAM packet, determine whether a value of the relevant parameter reaches a preset threshold, and obtain a determination result. The relevant parameter characterizes the signal degradation.

The trigger unit 53 is further configured to trigger the path protection switching in the case that the value of the relevant parameter reaches the preset threshold.

In an alternative embodiment of the present disclosure, the relevant parameter includes at least one of a bit error rate or a packet loss rate.

In an embodiment of the present disclosure, the OAM packet includes a segment routing label.

In the embodiment of the present disclosure, the identification unit 52 and the trigger unit 53 in the node device can be implemented by a CPU, a DSP, a MCU or a FPGA in the node device. The second communication unit 51 in the terminal can be implemented in practical application by a communication module (including a basic communication kit, an operating system, a communication module, a standardized interface and a protocol) and a transceiver antenna.

It should be noted that when the node device according to the above embodiment performs protection switching, division of the above program modules is illustrated merely as an example. In practical application, the above processing can be allocated by different program modules as necessary, that is, the internal structure of the node device is divided into different program modules to complete all or part of the above-described processing. In addition, the node device provided in the above embodiments belongs to the same concept as the method embodiments of protection switching. For a detailed implementation process, the method embodiments may be referred to, and details are not described herein

Embodiments of the present disclosure further provide a node device. FIG. 8 is a structural diagram of a hardware composition of a node device according to an embodiment of the present disclosure. As shown in FIG. 8, the node device 60 includes a memory 62, a processor 61 and a computer program stored on the memory 62 and executable by the processor 61. When the processor 61 executes the computer program, the steps of the protection switching method applied to the first node device or the second node device described in the embodiments of the present disclosure are implemented.

It can be appreciated that the node device 60 further includes a communication interface 63. The components in the node device 60 are coupled together through a bus system 64. The bus system 64 is used to enable connection communication between these components. In addition to the data bus, the bus system 64 also includes a power bus, a control bus and a status signal bus. However, for clarity, various buses are marked as bus system 64 in Fig. 8.

It can be appreciated that the memory 62 may be volatile or non-volatile memory, or may include both volatile and non-volatile memory. The non-volatile memory may be a Read Only Memory, ROM, a Programmable Read-Only Memory, PROM, a Erasable Programmable Read-Only Memory, EPROM, a Electrically Erasable Programmable Read-Only Memory, EEPROM, a Ferromagnetic Random Access Memory, FRAM, a Flash Memory, a magnetic surface memory, an optical disc or a Compact Disc Read-Only Memory, CD-ROM. The magnetic surface memory may be a magnetic disk storage or a magnetic tape storage. The volatile memory may be a Random Access Memory, RAM, that functions as an external cache. By way of example, but not limitation, many forms of RAMs may be available, such as a Static Random Access Memory, SRAM, a Synchronous Static Random Access Memory, SSRAM, a Dynamic Random Access Memory, DRAM, a Synchronous Dynamic Random Access Memory, SDRAM, a Double Data Rate Synchronous Dynamic Random Access Memory, DDRSDRAM, an Enhanced Synchronous Dynamic Random Access Memory, ESDRAM, a SyncLink Dynamic Random Access Memory, SLDRAM, and a Direct Rambus Random Access Memory, DRRAM. The memory 62 described in the embodiments of the present disclosure is intended to include, but is not limited to, these and any other suitable types of memory.

The method described in the above embodiments of the present disclosure may be applied to, or implemented by, the processor 61. The processor 61 may be an integrated circuit chip with signal processing capability. In the implementation process, each step of the above method can be accomplished by an integrated logic circuit of hardware or an instruction in the form of software in the processor 61. The processor 61 described above may be a general purpose processor, a DSP, or other programmable logic device, discrete gate or transistor logic device, discrete hardware component, or the like. The processor 61 may implement or perform the methods, steps, and logical block diagrams disclosed in the embodiments of the present disclosure. The general purpose processor may be a microprocessor or any conventional processor or the like. The steps of the method disclosed in the embodiments of the present disclosure can be directly accomplished by the hardware decoding processor, or be accomplished by the combination of hardware and software modules in the decoding processor. The software module may be located in a storage medium located in the memory 62. The processor 61 reads the information in the memory 62 and completes the steps of the foregoing method in combination with the hardware.

In an exemplary embodiment, the node device 60 may be implemented by one or more Application Specific Integrated Circuit, ASIC, DSP, Programmable Logic Device, PLD, Complex Programmable Logic Device, CPLD, FPGA, general purpose processor, controller, Micro Controller Unit, MCU, microprocessor, or other electronic components for performing the foregoing methods.

In an exemplary embodiment, a computer-readable storage medium is provided, such as a memory 62 including computer programs. The computer programs may be executed by the processor 61 in the node device 60 to accomplish the steps of the foregoing method.

The computer-readable storage medium provided in the embodiments of the present disclosure stores computer programs. When the computer programs are executed by a processor, the steps of the protection switching method applied to the first node device or the second node device described in the embodiments of the present disclosure are implemented.

The methods disclosed in the method embodiments of the present disclosure may be arbitrarily combined without conflict to obtain new method embodiments.

The features disclosed in the product embodiments of the present disclosure may be arbitrarily combined without conflict to obtain new product embodiments.

The features disclosed in the method or device embodiments of the present disclosure may be arbitrarily combined without conflict to obtain new method or device embodiments.

In the embodiments of the present disclosure, it should be understood that the disclosed device and method may be implemented in other ways. The device embodiments described above are merely illustrative. For example, the partitioning of the unit is merely a partitioning of logical function. Other partitioning mode may be adopted in practical implementation. For example, multiple units or components may be combined or integrated into another system, or some features may be ignored or not executed. In addition, the coupling, the direct coupling or the communication connection between the components shown or discussed may be accomplished through some interfaces, and the indirect coupling or communication connection of devices or units may be electrical, mechanical or in other forms.

The units described above as separate components may or may not be physically separate, and the components displayed as units may or may not be a physical unit, that is, they may be located in one place or distributed over multiple network units. Some or all of the units can be selected according to practical needs to achieve the purpose of the embodiment.

In addition, in the embodiments of the present disclosure, all the function units may be integrated into one processing unit, or each unit may be separately used as one unit, or two or more units may be integrated into one unit. The integrated unit may be implemented in the form of hardware or combination of hardware and software function unit.

A person of ordinary skill in the art will appreciate that all or part of the steps of the method embodiments may be implemented by a program instructing relevant hardware. The program may be stored in a computer-readable storage medium. When the program is implemented, the steps of the method embodiments can be executed. The foregoing storage medium includes a removable storage device, a ROM, a RAM, a magnetic disk, an optical disk, or any other medium that can store program code.

Alternatively, if the integrated units of the disclosure are realized in the form of software function modules and sold or used as a stand-alone product, it can also be stored in a computer-readable storage medium. Based on such an understanding, the technical solutions of the embodiments of the present disclosure, or the contribution of the technical solutions to the related art, can be embodied in the form of a software product. The software product is stored in a storage medium, and includes multiple instructions to a computer device (which may be a personal computer, a server, a network device, etc.) to perform all or part of the methods described in the embodiments of the present disclosure. The above storage medium can be a mobile storage device, a ROM, a RAM, a magnetic disc, an optical disc or other medium that can store program code.

The foregoing descriptions are merely specific embodiments of the present disclosure, but the scope of protection of the present disclosure is not limited thereto. Any change or replacement readily contemplated by a person skilled in the art within the technical scope disclosed in the present disclosure shall fall within the scope of protection of the present disclosure. Accordingly, the scope of protection of the present disclosure shall be subject to the scope of protection of the claims.

## Claims

1. A protection switching method, **characterized in that** the method is applied to a transmission network based on a segment routing technology, and the method comprises:
identifying (101), by a first node device, a received packet upon detecting signal degradation, wherein the first node device is an intermediate node device in the transmission network; and
when identifying, by the first node device, that the packet is an Operation Administration and Maintenance, OAM, packet, filling (102) the OAM packet with a first identifier, and sending a modified OAM packet, wherein the first identifier is used for indicating the signal degradation, the OAM packet is configured to be used by a second node device downstream to trigger path protection switching, and the OAM packet comprises a segment routing label,
wherein when identifying, by the first node device, that the packet is the OAM packet, filling the OAM packet with the first identifier comprises:
when identifying, by the first node device, that the packet is a specific type of OAM packet, modifying a specific reserved field identifier in the OAM packet to the first identifier, wherein the specific type of OAM packet comprises an OAM packet of a Continuity Check Message, CCM,
wherein identifying, by the first node device, that the packet is the specific type of OAM packet comprises:
identifying, by the first node device, a first specific field in the packet, and determining that the packet is the OAM packet in the case that a value of the first specific field is a first specific value; and
identifying, by the first node device, a second specific field in the OAM packet, and determining that the packet is the specific type of OAM packet in the case that a value of the second specific field is a second specific value,
wherein before sending the modified OAM packet, the method further comprises:
determining, by the first node device, a relevant parameter characterizing the signal degradation, and filling a filling area of the OAM packet with the relevant parameter,
wherein the relevant parameter comprises at least one of a bit error rate or a packet loss rate.

2. The method of claim 1, wherein the method further comprises:
receiving (301), by the second node device, the modified packet, from the first node device, and identifying the first identifier in the modified OAM packet; and
triggering (302), by the second node device, the path protection switching.

3. The method of claim 2, further comprising:
identifying, by the second node device, the relevant parameter in a filling area of the OAM packet, determining whether a value of the relevant parameter reaches a preset threshold, and obtaining a determination result, wherein the relevant parameter characterizes the signal degradation,
wherein triggering, by the second node device, the path protection switching comprises:
triggering, by the second node device, the path protection switching in the case that the determination result is that the value of the relevant parameter reaches the preset threshold.

4. The method of claim 3, wherein the relevant parameter comprises at least one of a bit error rate or a packet loss rate.

5. A computer-readable storage medium, storing computer programs thereon that, when executed by a processor, implements the method of claim 1, or any one of claims 2 to 4.

6. A node device, comprising a memory, a processor, and a computer program stored on the memory and executable by the processor, the computer program, when executed by the processor, implements the method of claim 1.

## Patentansprüche

1. Schutzschaltungsverfahren, **dadurch gekennzeichnet, dass** das Verfahren auf ein Übertragungsnetz basierend auf einer Segment-Routing-Technologie angewendet wird, und dass das Verfahren Folgendes umfasst:
Identifizieren (101), durch eine erste Knotenvorrichtung, eines empfangenen Pakets beim Erfassen von Signalverschlechterung, wobei die erste Knotenvorrichtung eine Zwischenknotenvorrichtung im Übertragungsnetz ist; und
wenn identifiziert wird, durch die erste Knotenvorrichtung, dass das Paket ein Betrieb-Verwaltung-und-Wartung (Operation, Administration and Maintenance, OAM) -Paket ist, Füllen (102) des OAM-Pakets mit einer ersten Kennung und Senden eines modifizierten OAM-Pakets, wobei die erste Kennung zum Angeben der Signalverschlechterung verwendet wird, das OAM-Paket konfiguriert ist, um durch eine zweite Knotenvorrichtung stromabwärts verwendet zu werden, um Pfadschutzschaltung auszulösen, und das OAM-Paket eine Segment-Routing-Kennzeichnung umfasst,
wobei, wenn durch die erste Knotenvorrichtung identifiziert wird, dass das Paket das OAM-Paket ist, das Füllen des OAM-Pakets mit der ersten Kennung Folgendes umfasst:
wenn durch die erste Knotenvorrichtung identifiziert wird, dass das Paket eine bestimmte Art von OAM-Paket ist, Modifizieren einer bestimmten Kennung für ein reserviertes Feld im OAM-Paket zur ersten Kennung, wobei die bestimmte Art von OAM-Paket ein OAM-Paket einer Continuity Check Message (CCM) umfasst,
wobei das Identifizieren, durch die erste Knotenvorrichtung, dass das Paket die bestimmte Art von OAM-Paket ist, Folgendes umfasst:
Identifizieren, durch die erste Knotenvorrichtung, eines ersten bestimmten Felds im Paket, und Bestimmen, dass das Paket das OAM-Paket ist, in dem Fall, dass ein Wert des ersten bestimmten Felds ein erster bestimmter Wert ist; und
Identifizieren, durch die erste Knotenvorrichtung, eines zweiten bestimmten Felds im OAM-Paket, und Bestimmen, dass das Paket die bestimmte Art von OAM-Paket ist, in dem Fall, dass ein Wert des zweiten bestimmten Felds ein zweiter bestimmter Wert ist,
wobei, vor dem Senden des modifizierten OAM-Pakets, das Verfahren ferner Folgendes umfasst:
Bestimmen, durch die erste Knotenvorrichtung, eines relevanten Parameters, der die Signalverschlechterung kennzeichnet, und Füllen eines Füllbereichs des OAM-Pakets mit dem relevanten Parameter,
wobei der relevante Parameter mindestens eines aus einer Bitfehlerrate oder einer Paketverlustrate umfasst.

2. Verfahren nach Anspruch 1, wobei das Verfahren ferner Folgendes umfasst:
Empfangen (301), durch die zweite Knotenvorrichtung, des modifizierten Pakets von der ersten Knotenvorrichtung, und Identifizieren der ersten Kennung im modifizierten OAM-Paket; und
Auslösen (302), durch die zweite Knotenvorrichtung, der Pfadschutzschaltung.

3. Verfahren nach Anspruch 2, ferner umfassend:
Identifizieren, durch die zweite Knotenvorrichtung, des relevanten Parameters in einem Füllbereich des OAM-Pakets, Bestimmen, ob ein Wert des relevanten Parameters einen voreingestellten Schwellenwert erreicht, und Erhalten eines Bestimmungsergebnisses, wobei der relevante Parameter die Signalverschlechterung kennzeichnet,
wobei das Auslösen, durch die zweite Knotenvorrichtung, der Pfadschutzschaltung Folgendes umfasst:
Auslösen, durch die zweite Knotenvorrichtung, der Pfadschutzschaltung im Fall, dass das Bestimmungsergebnis ergibt, dass der Wert des relevanten Parameters den voreingestellten Schwellenwert erreicht.

4. Verfahren nach Anspruch 3, wobei der relevante Parameter mindestens eines aus einer Bitfehlerrate oder einer Paketverlustrate umfasst.

5. Computerlesbares Speichermedium, das darauf Computerprogramme speichert, die, wenn sie durch einen Prozessor ausgeführt werden, das Verfahren nach Anspruch 1 oder einem der Ansprüche 2 bis 4 implementieren.

6. Knotenvorrichtung, umfassend einen Speicher, einen Prozessor und ein Computerprogramm, das auf dem Speicher gespeichert wird und durch den Prozessor ausgeführt werden kann, wobei das Computerprogramm, wenn es durch den Prozessor ausgeführt wird, das Verfahren nach Anspruch 1 implementiert.

## Revendications

1. Procédé de commutation de protection, **caractérisé en ce que** le procédé est appliqué à un réseau de transmission basé sur une technologie de routage de segment, et le procédé comprend :
l'identification (101), par un premier dispositif de noeud, d'un paquet reçu lors de la détection d'une dégradation de signal, dans lequel le premier dispositif de noeud est un dispositif de noeud intermédiaire dans le réseau de transmission ; et
lors de l'identification, par le premier dispositif de noeud, du fait que le paquet est un paquet d'exploitation, d'administration et de maintenance, OAM, le remplissage (102) du paquet OAM avec un premier identifiant, et l'envoi d'un paquet OAM modifié, dans lequel le premier identifiant est utilisé pour indiquer la dégradation de signal, le paquet OAM est configuré pour être utilisé par un deuxième dispositif de noeud en aval pour déclencher la commutation de protection de chemin, et le paquet OAM comprend une étiquette de routage de segment,
dans lequel lors de l'identification, par le premier dispositif de noeud, du fait que le paquet est le paquet OAM, le remplissage du paquet OAM avec le premier identifiant comprend :
lors de l'identification, par le premier dispositif de noeud, du fait que le paquet est un type spécifique de paquet OAM, la modification d'un identifiant de champ réservé spécifique dans le paquet OAM au premier identifiant, dans lequel le type spécifique de paquet OAM comprend un paquet OAM d'un message de vérification de continuité, CCM,
dans lequel l'identification, par le premier dispositif de noeud, du fait que le paquet est le type spécifique de paquet OAM comprend :
l'identification, par le premier dispositif de noeud, d'un premier champ spécifique dans le paquet, et la détermination du fait que le paquet est le paquet OAM dans le cas où une valeur du premier champ spécifique est une première valeur spécifique ; et
l'identification, par le premier dispositif de noeud, d'un deuxième champ spécifique dans le paquet OAM, et la détermination du fait que le paquet est le type spécifique de paquet OAM dans le cas où une valeur du deuxième champ spécifique est une deuxième valeur spécifique,
dans lequel avant l'envoi du paquet OAM modifié, le procédé comprend en outre :
la détermination, par le premier dispositif de noeud, d'un paramètre pertinent caractérisant la dégradation de signal, et le remplissage d'une zone de remplissage du paquet OAM avec le paramètre pertinent,
dans lequel le paramètre pertinent comprend un taux d'erreur binaire et/ou un taux de perte de paquets.

2. Procédé selon la revendication 1, dans lequel le procédé comprend en outre :
la réception (301), par le deuxième dispositif de noeud, du paquet modifié, à partir du premier dispositif de noeud, et l'identification du premier identifiant dans le paquet OAM modifié ; et
le déclenchement (302), par le deuxième dispositif de noeud, de la commutation de protection de chemin.

3. Procédé selon la revendication 2, comprenant en outre :
l'identification, par le deuxième dispositif de noeud, du paramètre pertinent dans une zone de remplissage du paquet OAM, la détermination du fait qu'une valeur du paramètre pertinent atteint ou non un seuil prédéfini, et l'obtention d'un résultat de détermination, dans lequel le paramètre pertinent caractérise la dégradation de signal,
dans lequel le déclenchement, par le deuxième dispositif de noeud, de la commutation de protection de chemin comprend :
le déclenchement, par le deuxième dispositif de noeud, de la commutation de protection de chemin dans le cas où le résultat de détermination indique que la valeur du paramètre pertinent atteint le seuil prédéfini.

4. Procédé selon la revendication 3, dans lequel le paramètre pertinent comprend un taux d'erreur binaire et/ou un taux de perte de paquets.

5. Support de stockage lisible par ordinateur, stockant des programmes informatiques qui, lorsqu'ils sont exécutés par un processeur, mettent en oeuvre le procédé de la revendication 1, ou de l'une quelconque des revendications 2 à 4.

6. Dispositif de noeud, comprenant une mémoire, un processeur, et un programme informatique stocké sur la mémoire et exécutable par le processeur, le programme informatique, lorsqu'il est exécuté par le processeur, met en oeuvre le procédé de la revendication 1.
